# EUROPEAN PATENT APPLICATION

(11) **EP 3 208 871 A1**
(43) Date of publication of application: **23.08.2017**
(21) Application number: 16155901.8
(22) Date of filing: 16.02.2016
(51) Int. Cl.: H01M 4/136, H01M 4/1397, H01M 4/58, H01M 4/62, C01B 17/02, H01M 10/052

(54) **PROCESS FOR PRODUCING CARBON SULFUR COMPOSITE MATERIALS**

(71) Applicant: BASF SE, 67056 Ludwigshafen am Rhein (DE)
(72) Inventor: Weiss, Thomas, 68549 Ilvesheim (DE); Schneider, Holger, 85704 Tucson (US); Leitner, Klaus, 67063 Ludwigshafen (DE); Kulisch, Joern, 69214 Eppelheim (DE); Hoerhammer, Harald, 67061 Ludwigshafen (DE); Schwab, Matthias Georg, 68199 Mannheim (DE); Oehrlein, Reinhold, 79618 Rheinfelden-Herten (DE)
(74) Representative: BASF IP Association

(57) **Abstract**

The present invention relates to a process for producing carbon-sulfur composite materials comprising carbon and elemental sulfur, to carbon-sulfur composite materials comprising carbon and elemental sulfur obtained or obtainable by the process of the invention, to cathode materials for electrochemical cells comprising said carbon-sulfur composite materials and to electrochemical cells comprising said cathode materials.

## Description

The present invention relates to a process for producing carbon-sulfur composite materials comprising carbon and elemental sulfur, to carbon-sulfur composite materials comprising carbon and elemental sulfur obtained or obtainable by the process of the invention, to cathode materials for electrochemical cells comprising said carbon-sulfur composite materials and to electrochemical cells comprising said cathode materials.

Secondary batteries, accumulators or rechargeable batteries are just some embodiments by which electrical energy can be stored after generation and used when required. Due to the significantly better power density, there has been a move in recent times away from the water-based secondary batteries to development of batteries in which the charge transport in the electrical cell is accomplished by lithium ions.

However, the energy density of conventional lithium ion batteries which have a carbon anode and a cathode based on metal oxides is limited. New horizons with regard to energy density have been opened up by lithium-sulfur cells. In lithium-sulfur cells, sulfur in the sulfur cathode is reduced via polysulfide ions to S²⁻, which is reoxidized when the cell is charged to form sulfur-sulfur bonds.

A problem, however, is the solubility of the polysulfides, for example Li₂S₄ and Li₂S₆, which are generally soluble in the solvent and can migrate to the anode. The consequences may include: loss of capacitance and deposition of electrically insulating material on the sulfur particles of the electrode. The migration of the polysulfide ions from the cathode to anode can ultimately lead to discharge of the affected cell and to cell death in the battery. This unwanted migration of polysulfide ions is also referred to as "shuttling", a term which is also used in the context of the present invention.

Carbon sulfur composites are important components of the cathodes of lithium sulfur cells contributing significantly to the overall performance of lithium sulfur cells in particular with respect to lowering the internal impedance by providing a conductive element. Depending on the porous carbon architecture and its surface modification, the carbon framework can increase the coulombic efficiency, lower the degree of capacity fading, and help limit self-discharge by physically trapping polysulfide ions within the cathode although these effects are usually limited to short-term cycling.

US 2012/0119158 A1 describes a process for producing a composite sulfur/carbon material wherein solely sulfur and carbon are heated together in a sealed reactor in a temperature range between 115 °C and 400 °C.

US 2009/0311604 A1 describes a sulfur-carbon material wherein sulfur is sorbed into the nanoporosity of a carbon matrix such that there is free volume available within said nanoporosity.

J. Guo et al., Nano Lett. 2011, 11, 4288-4294, disclose the synthesis of sulfur-impregnated disordered carbon nanotubes as cathode material for lithium-sulfur batteries.

CN 103094535 describes the preparation of a S/C porous nanocomposite, wherein porous carbon material is mixed with sulfur at wt. ratio of 1:1 to 1:15 and the mixture is heated to 100 - 400 °C in an inert gas atmosphere at a heating rate of 1 - 20 °C/min and keeping the final temperature for 1-24 h. The used porous carbon has been prepared by carbonizing pig bone, cattle bone, horse bone, sheep bone, fish scale, crab shell or donkey bone.

J. Wang et al., Electrochimica Acta 48 (2003) 1861 - 1867 describes two methods for the preparation of sulfur-carbon nano-composites. In a first method active carbon and elemental sulfur were mixed and the mixture was heated and kept at 200 °C for 6 h. In a second method active carbon and elemental sulfur were mixed and the mixture was mechanically milled by a planetary mono mill (Fritsch, Germany). The procedure included continuous milling for 50 min with an interval of 10 min and repeated for 24 h with milling speed 300 rps.

US 2011/318654 describes a composite material comprising a reaction product of at least one organic polymer (A), sulfur (B) and carbon (C) in a polymorph which comprises at least 60 percent sp²-hybridized carbon atoms and comprising additionally particles or domains which comprise carbon (C) filled with sulfur (B).

US 2012/298926 discloses composite materials comprising a reaction product of (A) at least one organic polymer, (B) sulfur, (C) carbon in a polymorph which comprises at least 60 percent sp²-hybridized carbon atoms, and (D) 2-20 percent by weight of a perfluorinated or partly fluorinated polymer, based on the total weight of components (A), (B) and (C) used before reaction, and also a process for producing said composite materials.

US 2013/244097 describes a composite material suitable for cathode material for a lithium-sulfur cell. The composite material is obtained by thermally treating a mixture, wherein the mixture comprises: (A) a fluorinated polymer and (B) carbon in a polymorph containing at least 60 percent sp²-hybridized carbon atoms; or (A) a fluorinated polymer and (C) a sulfur-containing component; or (A) a fluorinated polymer, (B) carbon in a polymorph containing at least 60 percent sp²-hybridized carbon atoms, and (C) a sulfur-containing component, in which the proportion of the sum of the proportions by weight of starting components (A) and (B), (A) and (C), or (A), (B), and (C) in the respective mixture prior to the thermal treatment, based on the total weight of the mixture, is 90 to 100 percent by weight, and wherein the thermal treatment of the mixture containing the above starting components is performed at a temperature of at least 115 °C.

US 2014/0212771 discloses an electrode material for an electrical cell comprising activated carbon fibers as component (A) which have been impregnated with elemental sulfur as component (B).

US 2014/050992 describes the preparation of sulfur-carbon composite materials comprising (A) at least one carbon composite material comprising (a) a carbonization product of at least one carbonaceous starting material, incorporating (aa) particles of at least one electrically conductive additive, the particles having an aspect ratio of at least 10, and (B) elemental sulfur.

The sulfur-containing electroactive composites or cathode materials described in the literature still have shortcomings with regard to one or more of the properties desired for such materials and the electrochemical cells produced therefrom. Desirable properties are, for example, high electrical conductivity of the cathode materials, maintenance of cathode capacity during lifetime, reduced self-discharge of the electrochemical cells during storage, an increase in the lifetime of the electrochemical cell, an improvement in the mechanical stability of the cathode or a reduced change in volume of the cathodes during a charge-discharge cycle. In general, the desired properties mentioned also make a crucial contribution to improving the economic viability of the electrochemical cell, which, as well as the aspect of the desired technical performance profile of an electrochemical cell, is of crucial significance to the user. Likewise the known processes for producing sulfur-containing electroactive composites or cathode materials are not appropriate for producing new, improved materials.

Proceeding from this prior art, the object was to find a simple, flexible and economic method for the preparation of beneficial carbon-sulfur composite materials. It was also an object to find new carbon-sulfur composite materials, which improve the performance of cathodes of lithium sulfur cells and the performance of the corresponding lithium sulfur cells themselves, particular in view of an improved electrical conductivity, combined with high cathode capacity, high mechanical stability and long lifetime.

This object is achieved by a process for producing a carbon-sulfur composite material comprising
(A) carbon, preferably carbon in a polymorph comprising at least 60% sp²-hybridized carbon atoms
   and
(B) elemental sulfur,
wherein the mass fraction of extractable sulfur from the carbon-sulfur composite material determined by exhaustive extraction of said carbon-sulfur composite material with toluene at 80 °C using 1000 ml of toluene per 1 g of carbon-sulfur composite material is in the range from 0 to 0.05, preferably in the range from 0.0 to 0.01, in particular in the range from 0.00 to 0.002, comprising at least the process steps of
(i) loading carbon, preferably porous carbon, in particular carbon selected from carbon black and activated carbon, with at least one compound comprising a 3 to 8 membered heterocyclic ring, which comprises an electrophilic carbon atom, in order to obtain impregnated carbon,
(ii) thermal treatment of a mixture comprising elemental sulfur and the impregnated carbon obtained to process step (i) at a temperature in the range from 200 °C to 700 °C, preferably in the range form 250 °C to 500 °C, in particular in the range from 300 °C to 400 °C, in order to obtain a sulfur-carbon composite,
   and
(iii) treating the sulfur-carbon composite obtained in process step (ii) with a solvent, which dissolves sulfur, in order to remove extractable sulfur and to obtain the carbon-sulfur composite material.

The sulfur-carbon composite materials obtained or obtainable by the inventive process are composite materials. Composite materials are generally understood to mean materials which are solid mixtures which cannot be separated manually and which have different properties than the individual components.

The carbon-sulfur composite material obtained or obtainable by the inventive process comprises as a first component carbon, also referred to hereinafter as carbon (A), for short, preferably carbon in a polymorph comprising at least 60% sp²-hybridized carbon atoms and as a second component elemental sulfur, also referred to hereinafter as sulfur (B), for short.

Carbon, preferably carbon in a polymorph comprising at least 60% sp²-hybridized carbon atoms is known as such. Such kind of carbon is usually known as an electrically conductive carbonaceous material and examples of such conductive carbonaceous material are preferably selected from carbon black and activated carbon.

Elemental sulfur is known as such.

The mass fraction of sulfur in the carbon-sulfur composite material can be varied in a wide range depending on the pore volume of the carbon used in process step (i). Preferably the mass fraction of sulfur in the carbon-sulfur composite material determined by elemental analysis is in the range from 0.3 to 0.8, preferably in the range from 0.35 to 0.5. Since the carbon-sulfur composite material comprises only very small amounts of sulfur that can be reached and dissolved by toluene, which dissolves sulfur quite well, the sulfur present in the carbon-sulfur composite material is locked in the pores of the carbon. The mass fraction of sulfur in the carbon-sulfur composite material refers to a dry, solvent-free carbon-sulfur composite material. Solvent free means that the weight of a sample which is dried under a vacuum of 1 mbar at 100 °C for 1 h does not change more than 0.1 % by weight.

In one embodiment of the present invention, the inventive process is characterized in that the mass fraction of sulfur in the carbon-sulfur composite material determined by elemental analysis is in the range from 0.3 to 0.8, preferably in the range from 0.35 to 0.5.

The carbon-sulfur composite material is a solid material, which can be obtained in a wide range of dimensions, in particular depending on the dimensions of the carbon used in process step (i). While carbon black, also called soot, is usually available in form of small particles, in particular in form of a powder, activated carbon is available in a wider range of dimensions, ranging from powders to monolithic bodies with dimensions of several centimeters. Preferably, the carbon used in process step (i) is a powder.

In one embodiment of the present invention, the inventive process is characterized in that the carbon-sulfur composite material is obtained in particulate form, preferably as a powder.

The carbon used in process step (i) can be selected from a wide variety of well-known carbonaceous materials such as graphite (from natural and synthetic sources), expandable (e.g. intercalated) graphite, graphite oxide, expanded graphite, carbon black, activated carbon, carbon fibers, carbon nanotubes, fullerenes, graphene, graphene nanoplatelets, coal or coke.

In process step (i) of the inventive process, carbon, preferably porous carbon, more preferably particles of porous carbon, in particular particles of porous carbon selected from carbon black and activated carbon, is loaded with at least one compound comprising a 3 to 8 membered heterocyclic ring, which comprises an electrophilic carbon atom, in order to obtain impregnated carbon, preferably in form of a free flowing powder of impregnated carbon particles.

The properties of the carbon used in process step (i) like the specific BET surface area or the pore volume can be varied in a wide range due to the existence of a huge number of different porous carbons originating from quite different sources. The carbon used in process step (i) preferably has a BET surface area in the range from 1000 to 2000 m²/g and a pore volume in the range from 0.5 to 1.1 cm³/g, more preferably a BET surface area in the range from 1600 to 1800 m²/g and a pore volume in the range from 0.75 to 1.1 cm³/g.

In one embodiment of the present invention, the inventive process is characterized in that the porous carbon of process step (i) has a BET surface area in the range from 1000 to 2000 m²/g and a pore volume in the range from 0.5 to 1.1 cm³/g.

Compound comprising a 3 to 8 membered heterocyclic ring, which comprises an electrophilic carbon atom are known. Such compounds can be also described as nucleophilic alkylating agents. Examples of such 3-membered heterocyclic ring compounds are substituted or unsubstituted oxiranes, aziridines or thiiranes. Preferred are substituted or unsubstituted oxiranes which are also called epoxides. Particular preferred epoxides are aryl substituted ethylene oxides, wherein the aryl group can be varied in a wide range. Preferred examples of aryl groups are phenyl, alkyl substituted phenyls like methyl phenyl or dimethyl phenyls, naphthyl or anthracenyl. Suitable 5 to 8 membered heterocyclic ring compounds usually comprise functional groups derived from strong acids. Further preferred examples of a compound comprising a 3 to 8 membered heterocyclic ring are 3-propanesultone and 1,4-butanesultone.

In one embodiment of the present invention, the inventive process is characterized in that the compound comprising a 3 to 8 membered heterocyclic ring is selected from the group of compounds consisting of epoxides, preferably aryl substituted ethylene oxides, 1,3-propanesultone and 1,4-butanesultone, preferably selected from the group of compounds consisting of styrene oxide and 1,4-butanesultone.

The loading of the carbon, preferably the porous carbon with at least one compound comprising a 3 to 8 membered heterocyclic ring can be done by various methods known to the person skilled in the art. Preferably, the solid carbon is mixed with a liquid comprising the compound comprising a 3 to 8 membered heterocyclic ring, preferably with a solution of the compound comprising a 3 to 8 membered heterocyclic ring in an organic solvent, preferably in an organic solvent with a boiling point below 150 °C at atmospheric pressure. The organic solvent ensures a homogeneous distribution of the compound comprising a 3 to 8 membered heterocyclic ring inside of the carbon. Further, the organic solvent should be easily removable by evaporation in order to allow the formation of a free flowing powder of impregnated carbon particles. That also means that the boiling point of the solvent is preferably more than 50 °C lower than the boiling point of the least one compound comprising a 3 to 8 membered heterocyclic ring.

The ratio of the mass fraction of the sum of all compounds comprising a 3 to 8 membered heterocyclic ring to the mass fraction of the carbon, preferably the porous carbon can be varied in a wide range depending amongst others on the pore volume of the used carbon, in particular if a free flowing powder of impregnated carbon particles is desired. Preferably the ratio of the mass fraction of the sum of all compounds comprising a 3 to 8 membered heterocyclic ring to the mass fraction of the carbon in the impregnated carbon is in the range from 0.1 to 10, preferably in the range from 0.5 to 5, in particular in the range from 1 to 3.

In one embodiment of the present invention, the inventive process is characterized in that in the impregnated carbon the ratio of the mass fraction of the sum of all compounds comprising a 3 to 8 membered heterocyclic ring to the mass fraction of the carbon is in the range from 0.1 to 10, preferably in the range from 0.5 to 5, in particular in the range from 1 to 3.

If a solvent was used in process step (i) in order to dissolve or dilute the at least one compound comprising a 3 to 8 membered heterocyclic ring, this solvent is at least partially, preferably almost completely removed by known procedures such as suction filtration, drying in vacuum with or without a gas flow, spray drying or freeze drying in order to obtain the impregnated carbon in solid form, preferably as a free flowing powder almost free of any additionally used solvent.

In process step (ii) of the inventive process, a mixture comprising elemental sulfur and the impregnated carbon, preferably particles of impregnated carbon, obtained to process step (i) is thermally treated at a temperature in the range from 200 °C to 700 °C, preferably in the range form 250 °C to 500 °C, in particular in the range form 300 °C to 400 °C in order to obtain a sulfur-carbon composite. In order to avoid loss of sulfur by sublimation or evaporation during the thermal treatment, process step (ii) is preferably done in a closed vessel such as an autoclave.

The ratio of the mass fraction of elemental sulfur to the mass fraction of carbon, preferably of porous carbon in the thermally treated mixture of process step (ii) can be varied in a wide range. In process step (ii) the ratio of the mass fraction of elemental sulfur to the mass fraction of carbon, preferably of porous carbon, is preferably in the range from 10 to 0.1, preferably in the range from 5 to 0.5, in particular in the range from 3 to 1.

In one embodiment of the present invention, the inventive process is characterized in that in process step (ii) the ratio of the mass fraction of elemental sulfur to the mass fraction of carbon, preferably of porous carbon, is in the range from 10 to 0.1, preferably in the range from 5 to 0.5, in particular in the range from 3 to 1.

In process step (iii) of the inventive process, the sulfur-carbon composite, which has been obtained in process step (ii), is treated with a solvent, which dissolves sulfur, preferably a solvent dissolving at least 0.01 g elemental sulfur per 1 litre of solvent at the boiling point of said solvent at atmospheric pressure, in order to remove extractable sulfur and to obtain the above described carbon-sulfur composite material.

Solvents, which dissolves sulfur, are known as such. Preferably, the solvent, which dissolves sulfur, is selected from the group consisting of carbon disulfide, benzene, toluene, diethyl disulfide and disulfur dichloride, in particular toluene.

In one embodiment of the present invention, the inventive process is characterized in that the solvent, which dissolves sulfur, is selected from the group consisting of carbon disulfide, benzene, toluene, diethyl disulfide and disulfur dichloride, in particular toluene.

Methods and appropriate equipment for extracting a soluble compound from a mixture comprising also at least one non-soluble compound are known as such. In process step (iii) the extractable sulfur is preferably removed by a continuous extraction process from the sulfur-carbon composite prepared in process step (ii), in particular by using a Soxhlet extractor or a Kumagawa extractor.

In one embodiment of the present invention, the inventive process is characterized in that in process step (iii) the extractable sulfur is removed by a continuous extraction process from the sulfur-carbon composite, in particular by using a Soxhlet extractor or a Kumagawa extractor.

The carbon-sulfur composite material is usually dried after removing the extractable sulfur in order to remove remaining amounts of the solvent, which dissolved the sulfur. After drying, the carbon-sulfur composite material is usually obtained as a powder.

Particularly preferred is a process for producing a carbon-sulfur composite material comprising
(A) carbon, preferably carbon in a polymorph comprising at least 60% sp²-hybridized carbon atoms
   and
(B) elemental sulfur,
wherein the mass fraction of sulfur in the carbon-sulfur composite material determined by elemental analysis is in the range from 0.3 to 0.8, preferably in the range from 0.35 to 0.5, and the mass fraction of extractable sulfur from the carbon-sulfur composite material determined by exhaustive extraction of said carbon-sulfur composite material with toluene at 80 °C using 1000 ml of toluene per 1 g of carbon-sulfur composite material is in the range from 0.0 to 0.01, preferably in the range from 0.00 to 0.002,
comprising at least the process steps of
(i) loading carbon, preferably porous carbon, in particular carbon selected from carbon black and activated carbon, with at least one compound comprising a 3 to 8 membered heterocyclic ring, which comprises an electrophilic carbon atom, selected from the group of compounds consisting of epoxides, preferably aryl substituted ethylene oxides, 1,3-propanesultone and 1,4-butanesultone, preferably selected from the group of compounds consisting of styrene oxide and 1,4-butanesultone, in order to obtain impregnated carbon,
(ii) thermal treatment of a mixture comprising elemental sulfur and the impregnate carbon obtained to process step (i) at a temperature in the range from 250 °C to 500 °C, in particular in the range from 300 °C to 400 °C, in order to obtain a sulfur-carbon composite,
   and
(iii) treating the sulfur-carbon composite obtained in process step (ii) with a solvent, which dissolves sulfur, selected from the group consisting of carbon disulfide, benzene, toluene, diethyl disulfide and disulfur dichloride, in particular toluene, in order to remove extractable sulfur and to obtain the carbon-sulfur composite material.

The inventive process allows in particular the preparation of carbon-sulfur composite materials, which are very useful for the preparation of cathodes for metal-sulfur cells, especially for the preparation of alkali metal-sulfur cells, in particular lithium-sulfur cells.

The present invention further also provides a carbon-sulfur composite material comprising
(A) carbon, preferably carbon in a polymorph comprising at least 60% sp²-hybridized carbon atoms
   and
(B) elemental sulfur,
wherein the mass fraction of extractable sulfur from the carbon-sulfur composite material determined by exhaustive extraction of said carbon-sulfur composite material with toluene at 80 °C using 1000 ml of toluene per 1 g of carbon-sulfur composite material is in the range from 0 to 0.05, preferably in the range from 0.0 to 0.01, in particular in the range from 0.00 to 0.002, obtained or obtainable, preferably obtained, by a process for producing a carbon-sulfur composite as described above. This process comprises the above-described process steps (i), (ii) and (iii), especially also with regard to preferred embodiments thereof.

The present invention likewise also provides a carbon-sulfur composite material comprising
(A) carbon, preferably carbon in a polymorph comprising at least 60% sp²-hybridized carbon atoms
   and
(B) elemental sulfur,
wherein the mass fraction of sulfur in the carbon-sulfur composite material determined by elemental analysis is in the range from 0.3 to 0.8, preferably in the range from 0.35 to 0.5, and the mass fraction of extractable sulfur from the carbon-sulfur composite material determined by exhaustive extraction of said carbon-sulfur composite material with toluene at 80 °C using 1000 ml of toluene per 1 g of carbon-sulfur composite material is in the range from 0 to 0.05, preferably in the range from 0.0 to 0.01, in particular in the range from 0.00 to 0.002.

The carbon-sulfur composite material is a solid material which can be used as component of a cathode in different forms such as a monolithic body or as a powder. Preferably the carbon-sulfur composite material is a powder.

In one embodiment of the present invention, the inventive carbon-sulfur composite material is characterized in that the carbon-sulfur composite material is in particulate form, preferably the carbon-sulfur composite material is a powder.

The inventive carbon-sulfur composite materials usually show a conductivity that is roughly in the same range as the conductivity of the carbons (A) used in the above-described process for producing the carbon-sulfur composite materials.

The inventive carbon-sulfur composite material can ultimately be used as an essential constituent of cathode materials for electrochemical cells, especially lithium-sulfur cells. Preferably, the inventive carbon-sulfur composite material is combined with a carbon, which further improves the electrical conductivity of the cathode material, and optionally at least one binder, which is typically an organic polymer. The binder serves principally for mechanical stabilization of the components of the electrode, by virtue of carbon-sulfur composite material particles and carbon particles being bonded to one another by the binder, and also has the effect that the cathode material has sufficient adhesion to an output conductor. The binder is preferably chemically inert toward the chemicals with which it comes into contact in an electrochemical cell.

The present invention further also provides a cathode material for an electrochemical cell comprising
(a) a carbon-sulfur composite material as described above,
(b) carbon in a polymorph comprising at least 60% sp²-hybridized carbon atoms, and
(c) optionally at least one polymer as a binder.

The inventive cathode material for an electrochemical cell comprises in addition to the inventive carbon-sulfur composite material (a), which has been described above, as a second component, carbon in a polymorph comprising at least 60% sp²-hybridized carbon atoms, also referred to hereinafter as carbon (b) for short, and optionally as component (c) a polymer as a binder, also referred to hereinafter as binder (c) for short.

The description and preferred embodiments of the carbon-sulfur composite material (a) and both its process of production and the used components correspond to the above description.

Carbon (b), which improves the electrical conductivity of the inventive cathode material, can be selected from graphite, carbon black, carbon nanotubes, graphene or mixtures of at least two of the aforementioned substances. Suitable carbons in a conductive polymorph are described in WO 2012/168851 page 4, line 30 to page 6, line 22.

In one embodiment of the present invention, the inventive cathode material for an electrochemical cell is characterized in that carbon (b) is selected from graphite, graphene, activated carbon and especially carbon black.

In one embodiment of the present invention, the inventive cathode material for an electrochemical cell comprises at least one polymer as a binder.

Binder (c) can be selected from a wide range of organic polymers. Suitable binders are described in WO 2012/168851 page 6, line 40 to page 7, line 30.

Particularly suitable binders for the inventive cathode material for an electrochemical cell are especially polyvinyl alcohol, poly(ethylene oxide), carboxymethyl cellulose (CMC) and halogenated (co)polymers, for example polyvinyl chloride or polyvinylidene chloride, especially fluorinated (co)polymers such as polyvinyl fluoride and especially polyvinylidene fluoride, lithiated Nafion and polytetrafluoroethylene.

In one embodiment of the present invention, the inventive cathode material for an electrochemical cell comprises in the range from 30 to 70% by weight, preferably 45 to 65% by weight, of sulfur, determined by elemental analysis, based on the total weight of the cathode material for an electrochemical cell.

In one embodiment of the present invention, the inventive cathode material for an electrochemical cell comprises in the range from 0.1 to 60% by weight of carbon in a conductive polymorph, preferably 1 to 30% by weight based on the total weight of the cathode material for an electrochemical cell. This carbon can likewise be determined by elemental analysis, for example, in which case the evaluation of the elemental analysis has to take into account the fact that carbon also arrives in organic polymers representing binders, and possibly further sources.

In one embodiment of the present invention, the inventive cathode material for an electrochemical cell comprises in the range from 0.1 to 20% by weight of binder, preferably 1 to 15% by weight and more preferably 3 to 12% by weight, based on the total weight of the cathode material for an electrochemical cell.

Inventive carbon-sulfur composite material (a) and inventive cathode material are particularly suitable as or for production of cathodes, especially for production of cathodes of lithium-containing batteries. The present invention provides for the use of inventive carbon-sulfur composite materials (a) and inventive cathode materials as or for production of cathodes for electrochemical cells.

The present invention further also provides a cathode, which has been produced from or using a cathode material as described above.

The inventive cathode may have further constituents customary *per se,* for example a current collector, which may be configured in the form of a metal wire, metal grid, metal mesh, expanded metal, metal sheet, metal foil or carbon paper/cloth. Suitable metal foils are especially aluminum foils.

In one embodiment of the present invention, the inventive cathode has a thickness in the range from 25 to 200 µm, preferably from 30 to 100 µm, based on the thickness without current collector.

In one embodiment of the present invention, inventive carbon-sulfur composite material (a) or inventive cathode material is processed to cathodes, for example in the form of continuous belts, which are processed by the battery manufacturer.

Inventive cathodes may also, for example, be in the form of rods, in the form of round, elliptical or square columns or in cuboidal form, or in the form of flat cathodes.

The present invention further provides electrochemical cells comprising at least one inventive cathode as described above, which has been produced from or using an inventive carbon-sulfur composite material (a) or an inventive cathode material as described above.

During the charging process of an inventive electrochemical cell the inventive cathode comprises usually a mixture of different electroactive sulfur-containing materials since more and more S-S-bonds are formed.

In one embodiment of the present invention, inventive electrochemical cells comprise, as well as inventive cathode, which has been produced from inventive carbon-sulfur composite material (a) or inventive cathode material, at least one anode comprising at least one alkali metal like lithium, sodium or potassium. Preferably the anode of the inventive electrochemical cell comprises lithium.

The alkali metal of anode of the inventive electrochemical cell can be present in the form of a pure alkali metal phase, in form of an alloy together with other metals or metalloids, in form of an intercalation compound or in form of an ionic compound comprising at least one alkali metal and at least one transition metal.

The anode of the inventive electrochemical cell can be selected from anodes being based on various active materials. Suitable active materials are metallic lithium, carbon-containing materials such as graphite, graphene, charcoal, expanded graphite, in particular graphite, furthermore lithium titanate (Li₄Ti₅O₁₂), anodes comprising In, Tl, Sb, Sn or Si, in particular Sn or Si, for example tin oxide (SnO₂) or nanocrystalline silicon, and anodes comprising metallic lithium.

In one embodiment of the present invention the electrochemical cell is characterized in that the anode of the inventive electrochemical cell is selected from graphite anodes, lithium titanate anodes, anodes comprising In, Tl, Sb, Sn or Si, and anodes comprising metallic lithium.

In one embodiment of the present invention, the inventive electrochemical cell is characterized in that the alkali metal of the anode is lithium.

The anode of the inventive electrochemical cell can further comprise a current collector. Suitable current collectors are, e.g., metal wires, metal grids, metal gauze and preferably metal foils such as copper foils.

The anode of the inventive electrochemical cell can further comprise a binder. Suitable binders can be selected from organic (co)polymers. Suitable organic (co)polymers may be halogenated or halogen-free. Examples are polyethylene oxide (PEO), cellulose, carboxymethyl cellulose, polyvinyl alcohol, polyethylene, polypropylene, polytetrafluoroethylene, polyacrylonitrile-methyl methacrylate, styrene-butadiene copolymers, tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers, ethylene-chlorofluoroethylene copolymers, ethylene-acrylic acid copolymers, optionally at least partially neutralized with alkali metal salt or ammonia, ethylene-methacrylic acid copolymers, optionally at least partially neutralized with alkali metal salt or ammonia, ethylene-(meth)acrylic ester copolymers, polysulfones, polyimides and polyisobutene.

Suitable binders are especially polyvinyl alcohol and halogenated (co)polymers, for example polyvinyl chloride or polyvinylidene chloride, especially fluorinated (co)polymers such as polyvi-nyl fluoride and especially polyvinylidene fluoride and polytetrafluoroethylene.

The average molecular weight M_{w} of binder may be selected within wide limits, suitable examples being 20,000 g/mol to 1,000,000 g/mol.

In one embodiment of the present invention, the anode of the inventive electrochemical cell can have a thickness in the range of from 15 to 200 µm, preferably from 30 to 100 µm, determined without the current collector.

The inventive electrochemical cell further comprises, as well as the inventive cathode and an anode, at least one electrolyte composition comprising at least one solvent and at least one alkali metal salt.

As regards suitable solvents and further additives for nonaqueous liquid electrolytes for lithium-based rechargeable batteries reference is made to the relevant prior art, e.g. Chem Rev. 2004, 104, 4303-4417, in particular table 1 on page 4307, table 2 on page 4308 and table 12 on page 4379.

The solvents of the electrolyte composition can be chosen from a wide range of solvents, in particular from solvents which dissolve alkali metal salts easily. Solvents or solvent systems, which dissolve alkali metal salts, are for example ionic liquids, polar solvents or combinations of apolar solvents combined with polar additives like crown ethers, like 18-crown-6, or cryptands. Examples of polar solvents are polar protic solvents or dipolar aprotic solvents.

Examples of polar protic solvents are water, alcohols like methanol, ethanol or iso-propanol, carbonic acids like acetic acid, ammonia, primary amines or secondary amines. Polar protic solvents can only be used in electrochemical cell comprising an anode, which comprises an alkali metal, if any contact between that anode and the polar protic solvent is strictly precluded by an appropriate separator.

Examples of dipolar aprotic solvents are organic carbonates, esters, ethers, sulfones like DMSO, sulfamides, amides like DMF or DMAc, nitriles like acetonitrile, lactams like NMP, lactones, linear or cyclic peralkylated urea derivatives like TMU or DMPU, fluorinated ether, fluorinated carbamates, fluorinated carbonated or fluorinated esters.

Suitable solvents of the electrolyte composition may be liquid or solid at room temperature and are preferably liquid at room temperature.
In one embodiment of the present invention the inventive electrochemical cell is characterized in that the solvent is a dipolar aprotic solvent.

A suitable solvent is preferably selected from polymers, cyclic or noncyclic ethers, cyclic or noncyclic acetals, cyclic or noncyclic organic carbonates and ionic liquids.

In one embodiment of the present invention the inventive electrochemical cell is characterized in that the solvent is selected from polymers, cyclic or noncyclic ethers, noncyclic or cyclic acetals and cyclic or noncyclic organic carbonates.

Examples of suitable polymers are especially polyalkylene glycols, preferably poly-C₁-C₄-alkylene glycols and especially polyethylene glycols. Polyethylene glycols may comprise up to 20 mol% of one or more C₁-C₄-alkylene glycols in copolymerized form. Polyalkylene glycols are preferably doubly methyl- or ethyl-capped polyalkylene glycols.

The molecular weight M_{w} of suitable polyalkylene glycols and especially of suitable polyethylene glycols may be at least 400 g/mol.

The molecular weight M_{w} of suitable polyalkylene glycols and especially of suitable polyethylene glycols may be up to 5 000 000 g/mol, preferably up to 2 000 000 g/mol.

Examples of suitable noncyclic ethers are, for example, diisopropyl ether, di-n-butyl ether, 1,2-dimethoxyethane, 1,2-diethoxyethane, preference being given to 1,2-dimethoxyethane.

Examples of suitable cyclic ethers are tetrahydrofuran and 1,4-dioxane.

Examples of suitable noncyclic acetals are, for example, dimethoxymethane, diethoxymethane, 1,1-dimethoxyethane and 1,1-diethoxyethane.

Examples of suitable cyclic acetals are 1,3-dioxane and especially 1,3-dioxolane.

Examples of suitable noncyclic organic carbonates are dimethyl carbonate, ethyl methyl carbonate and diethyl carbonate.

Examples of suitable cyclic organic carbonates are compounds of the general formulae (X) and (XI) 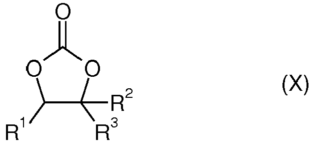 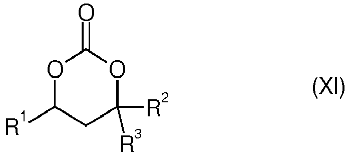 in which R¹, R² and R³ may be the same or different and are each selected from hydrogen and C₁-C₄-alkyl, for example methyl, ethyl, n-propyl, isopropyl, n-butyl, isobutyl, sec-butyl and tert-butyl, where R² and R³ are preferably not both tert-butyl.

In particularly preferred embodiments, R¹ is methyl and R² and R³ are each hydrogen, or R¹, R² and R³ are each hydrogen.

Another preferred cyclic organic carbonate is vinylene carbonate, formula (XII). 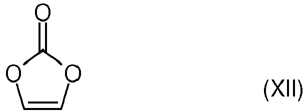 Preference is given to using the solvent(s) in what is called the anhydrous state, i.e. with a water content in the range from 1 ppm to 0.1 % by weight, determinable, for example, by Karl Fischer titration.

Possible alkali metal salts, which are used as conductive salts, have to be soluble in the solvent. Preferred alkali metal salts are lithium salts or sodium salts, in particular lithium salts.

In one embodiment of the present invention the inventive electrochemical cell is characterized in that the alkali metal salt is a lithium salt or sodium salt, preferably a lithium salt.

Suitable alkali metal salts are especially lithium salts. Examples of suitable lithium salts are LiPF₆, LiBF₄, LiClO₄, LiAsF₆, LiCF₃SO₃, LiC(CₙF₂ₙ₊₁SO₂)₃, lithium imides such as LiN(CₙF₂ₙ₊₁SO₂)₂, where n is an integer in the range from 1 to 20, LiN(SO₂F)₂, Li₂SiF₆, LiSbF₆, LiAlCl₄, and salts of the general formula (CₙF₂ₙ₊₁SO₂)ₘXLi, where m is defined as follows:
m = 1 when X is selected from oxygen and sulfur,
m = 2 when X is selected from nitrogen and phosphorus, and
m = 3 when X is selected from carbon and silicon.

Preferred alkali metal salts are selected from LiC(CF₃SO₂)₃, LiN(CF₃SO₂)₂, LiPF₆, LiBF₄, LiClO₄, and particular preference is given to LiPF₆ and LiN(CF₃SO₂)₂.

In one embodiment of the present invention, the concentration of conductive salt in electrolyte is in the range of from 0.01 M to 5 M, preferably 0.5 M to 1.5 M.

In one embodiment of the present invention, inventive electrochemical cells comprise one or more separators by which the electrodes are mechanically separated from one another. Suitable separators are polymer films, especially porous polymer films, which are unreactive toward metallic lithium and toward lithium sulfides and lithium polysulfides. Particularly suitable materials for separators are polyolefins, especially porous polyethylene films and porous polypropylene films.

Polyolefin separators, especially of polyethylene or polypropylene, may have a porosity in the range from 35 to 45%. Suitable pore diameters are, for example, in the range from 30 to 500 nm.

In another embodiment of the present invention, the separators selected may be separators composed of PET nonwovens filled with inorganic particles. Such separators may have a porosity in the range from 40 to 55%. Suitable pore diameters are, for example, in the range from 80 to 750 nm.

In one embodiment of the present invention, inventive electrochemical cells can contain additives such as wetting agents, corrosion inhibitors, or protective agents such as agents to protect any of the electrodes or agents to protect the salt(s).

In one embodiment of the present invention, inventive electrochemical cells can have a disc-like shape. In another embodiment, inventive electrochemical cells can have a prismatic shape.

In one embodiment of the present invention, inventive electrochemical cells can include a housing that can be from steel or aluminium.

In one embodiment of the present invention, inventive electrochemical cells are combined to stacks including electrodes that are laminated.

In one embodiment of the present invention, inventive electrochemical cells are selected from pouch cells.

Inventive electrochemical cells, in particular rechargeable lithium sulfur cells, comprising the inventive carbon-sulfur composite material (a) have overall advantageous properties. They exhibit good capacity, a low capacity fade rate per cycle, and good cycling stability on extended cycling.

A further aspect of the present invention refers to batteries, in particular to rechargeable lithium sulfur batteries, comprising at least one inventive electrochemical cell, for example two or more. Inventive electrochemical cells can be combined with one another in inventive batteries, for example in series connection or in parallel connection. Series connection is preferred.

Inventive batteries, in particular rechargeable lithium sulfur batteries, have advantageous properties. They exhibit good capacity, a low capacity fade rate per cycle, and good cycling stability on extended cycling.

The inventive electrochemical cells or inventive batteries can be used for making or operating cars, computers, personal digital assistants, mobile telephones, watches, camcorders, digital cameras, thermometers, calculators, laptop BIOS, communication equipment or remote car locks, and stationary applications such as energy storage devices for power plants. A further aspect of the present invention is a method of making or operating cars, computers, personal digital assistants, mobile telephones, watches, camcorders, digital cameras, thermometers, calculators, laptop BIOS, communication equipment, remote car locks, and stationary applications such as energy storage devices for power plants by employing at least one inventive battery or at least one inventive electrochemical cell.

A further aspect of the present invention is the use of the electrochemical cell as described above in motor vehicles, bicycles operated by electric motor, aircraft, ships or stationary energy stores.

The use of inventive electrochemical cells in devices gives the advantage of prolonged run time before recharging and a smaller loss of capacity in the course of prolonged run time. If the intention were to achieve an equal run time with electrochemical cells with lower energy density, a higher weight for electrochemical cells would have to be accepted.

The present invention further provides a device comprising at least one inventive electrochemical cell as described above. Preferred are mobile devices such as are vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven tackers.

The invention is illustrated by the examples which follow, but these do not restrict the invention.

Figures in percent are each based on % by weight, unless explicitly stated otherwise.

The following table 1 shows the characterization of some carbon samples which were used in the inventive process for producing a carbon-sulfur composite materials.

**Table 1**

| Carbon material | BET SA [m²/g] | BJH Des PD [nm] | total pore volume [cm³/g] | Average pore diameter [nm] | iodine adsorption [mg/g] |
|---|---|---|---|---|---|
| Carbon 1 | 1000 | | 4.128 | 100-2000 | 1140 |
| Carbon 2 | 62 | | 6.882 | 80-100 | |
| Carbon 3 | 418 | | 3.232 | 200-800 | |
| | | | | | |
| Carbon 4 | 1150 | | | | |
| Carbon 5 | | | | | |
| Carbon 6 | 1708 | 3.469 | 1.029 | 2000-2400 | 1200 |
| Carbon 7 | 1680 | 2.929 | 0.811 | 15 | 1600 |
| Carbon 8 | 1000 | | | | |
| Carbon 9 | | | | | |
| Carbon 10 | 1331 | 2.877 | 0.697 | | |
| Carbon 12 | 1618 | 3.867 | 0.922 | | |
| Carbon 13 | 2253 | 3.842 | 1.259 | | |
| Carbon 14 | 1500 | 9.637 | 1.286 | | |
| Carbon 17 | 1667 | 3.857 | 0.925 | | |

### I. Synthesis of carbon-sulfur composite material

The carbon-sulfur composite material is obtained by a several step procedure.
1. Impregnation of the carbon with a reactive compound (diluted in an vaporable solvent)
2. Drying of the impregnated carbon material
3. Infusion of sulfur in the pretreated carbon by heating in a sealed steel autoclave
4. Exhaustive extraction of sulfur
5. Characterization of the carbon-sulfur composite material

### I.1 General procedure

Carbon material (1.0 g, 0.083 mol) is dispersed in 20 ml of a 10 w% impregnating reactive compound in t-Butylmethylether and stirred at 25 °C for 2 h in a sealed glass tube. The black dispersion is transferred to a petri dish and dried at 25 °C/1013 mbarfor 15 h.

The dry impregnated carbon (1.2 g) is mixed with powdered sulfur (2.0 g) in an agate mortar. Subsequently the mixture is loaded into a sealed metal autoclave and heated to the given temperature in an electric oven. The autoclave consist of a stainless steel V2A metal block (10 x 8 cm; 5 cm high) with 9 dill holes (each 10 mm diameter; volume: 3 ml) which could be sealed in both sides by copper lining disks and screws (10 mm, M3). In order to facilitate the opening the screws are sprayed with commercial MoS₂_containing lubricant.

After cooling to 25 °C the autoclave is opened and the samples are collected separately. The samples are stored in an extraction hull and displaced in a Soxhlet extractor. The Soxhlet extractor was loaded with toluene and heated to 110°C. In order to obtain exhaustive extraction conditions the refluxing toluene kept at 80°C with a thermostat for the reflux cooling unit. The Sample (0.5 g) was extracted with 3 I toluene in 5 h. Then the sample was taken out and dried in vaccum (1 mbar, 2 h).

### I.2 Characterization of carbon-sulfur composite material

The dried samples have been characterized by elemental analysis and measurement of the electric resistance in the compressed bulk material. Thereby the sample was mixed with 10 w% PTFE powder (Polytetrafluoroethylene; Dupont) in an agate mortar. The mixture was compressed with 10 t/cm² to a cylindrical specimen of about 1-2 mm height and 13 mm diameter. The electric resistance was measured through the plane and divided by the height of the specimen.

The following table 2 depicts the influence of the temperature (200, 350 and 500 °C) for the sulfur content according to selected carbons like Carbon 1, Carbon 2 and Carbon 3. The table including the blank experiments without carbon impregnation (not inventive):

**Table 2:**

| | | S content after extraction [%] | | |
|---|---|---|---|---|
| | Reaction temperature: | Carbon 1 | Carbon 2 | Carbon 3 |
| Blank (no impregnation) | 200 | 1,0 | 0,1 | 1,0 |
| styrene oxide | 200 | 0,7 | 0,1 | 1,2 |
| 1,2-dodecene oxide | 200 | 0,4 | 0,1 | 0,1 |
| 1,4-Butansulton | 200 | 0,5 | 0,1 | 0,3 |
| Blank (no impregnation) | 350 | 8,5 | 0,98 | 24,4 |
| styrene oxide | 350 | 16,9 | 16,0 | 26,7 |
| 1,2-dodecene oxide | 350 | 11,7 | 12,1 | 21,1 |
| 1,4-Butansulton | 350 | 30,4 | 25,4 | 33,8 |
| Blank (no impregnation) | 500 | 8,5 | 1,1 | 29,5 |
| styrene oxide | 500 | 5,6 | 6,2 | 32,6 |
| 1,2-dodecene oxide | 500 | 25,0 | 28,4 | 14,4 |
| 1,4-Butansulton | 500 | 24,8 | 20,4 | 26,5 |

The following table 3 depicts the influence of carbon quality on the sulfur content [w%] in the carbon-sulfur compound processed at 350°C infiltration temperature.

**Table 3**

| Carbon material; S content [%] | blank (no impregnation) | styrene oxide | 1,2-dodecene oxide | 1,4-butansulton |
|---|---|---|---|---|
| Carbon 1 | 8,50 | 16,9 | 11,7 | 30,4 |
| Carbon 2 | 0,98 | 16,0 | 12,1 | 25,4 |
| Carbon 3 | 24,4 | 26,7 | 21,1 | 33,8 |
| Carbon 4 | 22,3 | 28,2 | 28,7 | 34,0 |
| Carbon 5 | 12,0 | 3,4 | 23,8 | 24,7 |
| Carbon 6 | 29,1 | 41,8 | 24,0 | 36,1 |
| Carbon 7 | 26,9 | 44,8 | 24,6 | 36,1 |
| Carbon 8 | 27,9 | 34,6 | 28,7 | 35,4 |
| Carbon 9 | 24,9 | 27,7 | 29,8 | 34,6 |
| Carbon 10 | 14,1 | 40,0 | 25,3 | 37,5 |
| Carbon 11 | 11,2 | 36,6 | 23,9 | 28,8 |
| Carbon 12 | 13,4 | 26,9 | 25,3 | 32,2 |
| Carbon 13 | 11,0 | 25,6 | 23,7 | 28,2 |
| Carbon 14 | 10,9 | 28,4 | 20,6 | 26,8 |
| Carbon 15 | 7,1 | 28,8 | 23,8 | 24,9 |
| Carbon 16 | 11,1 | 34,6 | 22,0 | 28,5 |
| Carbon 17 | 11,4 | 25,2 | 25,0 | 28,6 |

The following table 4 depicts the influence of carbon material on the electric resistance of the carbon-sulfur content at 350°C infiltration temperature.

**Table 4**

| carbon material resistance [Ohm/mm] | blank (no impregnation) | styrene oxide | 1,2-dodecene oxide | 1,4-butansulton |
|---|---|---|---|---|
| Carbon 4 | 0,3 | 0,2 | 0,8 | 0,2 |
| Carbon 5 | 0,8 | 1,2 | 1,2 | 2,2 |
| Carbon 6 | 6,1 | 1,9 | 31,0 | 3,8 |
| Carbon 7 | 0,6 | 1,1 | 1,9 | 1,2 |
| Carbon 8 | 0,3 | 2,6 | 12,1 | 1,5 |
| Carbon 9 | 0,3 | 0,3 | 0,5 | 0,2 |
| Carbon 10 | 0,1 | 0,1 | 0,5 | 0,2 |
| Carbon 11 | 0,2 | 0,1 | 0,3 | 0,4 |
| Carbon 12 | 0,2 | 0,2 | 0,2 | 0,2 |
| Carbon 13 | 0,1 | 0,6 | 0,2 | 0,2 |
| Carbon 14 | 0,2 | 0,2 | 0,2 | 0,1 |
| Carbon 15 | 0,2 | 0,2 | 0,2 | 0,2 |
| Carbon 16 | 0,2 | 0,1 | 0,1 | 0,9 |
| Carbon 17 | 0,2 | 0,2 | 0,2 | 0,2 |

### II. Preparation of cathodes

For the preparation of the cathode slurry, according to the given sulfur content of the extracted sulfur-carbon compound additional sulfur (Alfa Aesar, 99.5%) is mixed to achieve a total sulfur loading of 2.98 g. Occasionally Printex XE2 (Orion Engineered Carbons), and Vulcan XC72 (Cabot Corporation) in a ratio of 1:1 could be added to achieve a total carbon loading of 1.94 g carbon. To the solid mixture a 4.09 g poly(vinylalcohol)-solution (6 wt% in water, Selvol425, Sekisui) is mixed with subsequent addition of water and isopropanol to form a slurry. The resulting mixture was coated onto a primed aluminum foil [Lit: Patent US2010/0291442 A1)] using doctor blade technique and dried in vacuum at 40°C for 16 h. The sulfur loading of the final electrode was 2.0 g sulfur/cm².

### III. Electrochemical Testing

### III.1 Battery cell assembling

The electrolyte used was a mixture of 44 wt% 1,3-dioxolane, 44 wt% 1,2-dimethoxyethane, 8 wt% lithium bis(fluorosulfonyl)imide, 4 wt% lithium nitrate and 1 wt% guanidinium nitrate was used. Cell-assembling of pouch type cells was performed in a dry room by stacking cathode, a polyolefin separator (Celgard 2325) and lithium foil (50µm, Rockwood Lithium). After transfer of the assembly in a pouch-bag the cells were filled with electrolyte and immediately vacuum sealed. The amount of electrolyte has been calculated from the desired ratio of active mass (sulfur) to the electrolyte.

### III.2 Electrochemical testing

Discharge/charge measurements were performed in a potential range between 1.7 V and 2.5 V vs Li/Li+ and with an initial discharge rate of c/50 and subsequent rates of c/8 for charging and c/5 for discharging using MACCOR (Tulsa, Oklahoma), Astrol (Oberrohrdorf, Switzerland) or Basytec (Asselfingen, Germany) battery cyclers. The C-rate was calculated on the basis of the sulfur mass loading. For cycling experiments cells were placed in a pressure rig which have been adjusted to apply a uniaxial pressure of 10 kg/cm² normal to the electrode surfaces.

## Claims

1. A process for producing a carbon-sulfur composite material comprising
(A) carbon
and
(B) elemental sulfur,
wherein the mass fraction of extractable sulfur from the carbon-sulfur composite material determined by exhaustive extraction of said carbon-sulfur composite material with toluene at 80 °C using 1000 ml of toluene per 1 g of carbon-sulfur composite material is in the range from 0 to 0.05,
comprising at least the process steps of
(i) loading carbon with at least one compound comprising a 3 to 8 membered heterocyclic ring, which comprises an electrophilic carbon atom, in order to obtain impregnated carbon,
(ii) thermal treatment of a mixture comprising elemental sulfur and the impregnated carbon obtained to process step (i) at a temperature in the range from 200 °C to 700 °C in order to obtain a sulfur-carbon composite,
and
(iii) treating the sulfur-carbon composite obtained in process step (ii) with a solvent, which dissolves sulfur, in order to remove extractable sulfur and to obtain the carbon-sulfur composite material.

2. The process according to claim 1, wherein the mass fraction of sulfur in the carbon-sulfur composite material determined by elemental analysis is in the range from 0.3 to 0.8.

3. The process according to claim 1 or 2, wherein the carbon of process step (i) has a BET surface area in the range from 1000 to 2000 m²/g and a pore volume in the range from 0.5 to 1.1 cm³/g.

4. The process according to any of claims 1 to 3, wherein the compound comprising a 3 to 8 membered heterocyclic ring is selected from the group of compounds consisting of epoxides, 1,3-propanesultone and 1,4-butanesultone.

5. The process according to any of claims 1 to 4, wherein in process step (ii) the ratio of the mass fraction of elemental sulfur to the mass fraction of carbon is in the range from 10 to 0.1.

6. The process according to any of claims 1 to 5, wherein the solvent, which dissolves sulfur, is selected from the group consisting of carbon disulfide, benzene, toluene, diethyl disulfide and disulfur dichloride.

7. A carbon-sulfur composite material comprising
(A) carbon
and
(B) elemental sulfur,
wherein the mass fraction of extractable sulfur from the carbon-sulfur composite material determined by exhaustive extraction of said carbon-sulfur composite material with toluene at 80 °C using 1000 ml of toluene per 1 g of carbon-sulfur composite material is in the range from 0 to 0.05, obtained or obtainable by a process according to any of claims 1 to 6.

8. A carbon-sulfur composite material comprising
(A) carbon
and
(B) elemental sulfur,
wherein the mass fraction of sulfur in the carbon-sulfur composite material determined by elemental analysis is in the range from 0.3 to 0.8 and the mass fraction of extractable sulfur from the carbon-sulfur composite material determined by exhaustive extraction of said carbon-sulfur composite material with toluene at 80 °C using 1000 ml of toluene per 1 g of carbon-sulfur composite material is in the range from 0 to 0.05.

9. The carbon-sulfur composite material according to claim 8, wherein the carbon-sulfur composite material is in particulate form.

10. A cathode material for an electrochemical cell comprising
(a) a carbon-sulfur composite material according to any of claims 7 to 9,
(b) carbon in a polymorph comprising at least 60% sp²-hybridized carbon atoms, and
(c) optionally at least one polymer as a binder.

11. A cathode which has been produced from or using a cathode material according to claim 10.

12. An electrochemical cell comprising at least one cathode according to claim 11.

13. A battery comprising at least one electrochemical cell according to claim 12.

14. A device comprising at least one electrochemical cell according to claim 13.
